(19) Europäisches Patentamt

European Patent Office

Office européen des brevets

(11) **EP 1 970 786 A2**

(12) **EUROPEAN PATENT APPLICATION**

(43) Date of publication:
**17.09.2008 Bulletin 2008/38**

(51) Int Cl.:
***G05B 23/02*** *(2006.01)*

(21) Application number: **08102556.1**

(22) Date of filing: **12.03.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **15.03.2007 US 686777**

(71) Applicant: **Honeywell International Inc.
Morristown NJ 07960 (US)**

(72) Inventors:
• **Howard, III, Joseph S.
Chandler, AZ 85248 (US)**
• **Stramiello, Andrew D.
Mesa, AZ 85215 (US)**

(74) Representative: **Buckley, Guy Julian
Patent Outsourcing Limited
1 King Street
Bakewell
Derbyshire DE45 1DZ (GB)**

(54) **Automated engine data diagnostic analysis**

(57)   A method for diagnosing potential faults reflected in operational data for a turbine engine includes the steps of generating a diagnostic pattern for the operational data and comparing the diagnostic pattern with a plurality of historical patterns, to thereby identify one or more likely potential faults reflected in the operational data. The diagnostic pattern comprises a plurality of scalars. Each scalar represents an arithmetic relationship between values of the operational data and values predicted by a baseline thermodynamic model. Each historical pattern is linked to one or more specific faults.

FIG. 1

EP 1 970 786 A2

**Description**

FIELD OF THE INVENTION

The present invention relates to gas turbine engines and, more particularly, to improved methods and apparatus for analyzing engine operational data and potential faults represented therein.

BACKGROUND OF THE INVENTION

Gas turbine engines routinely undergo an acceptance test procedure before being delivered to a customer. This applies to newly manufactured gas turbine engines, as well as repaired or overhauled gas turbine engines. Typically the new, repaired, or overhauled gas turbine engine must pass the acceptance test procedure before delivery. Generally, the acceptance test procedure includes a performance calibration that generates data and an acceptance test data certificate that is a quality record used to ensure compliance with customer specifications.

In a gas turbine production, repair, or overhaul environment, rapid diagnostic analysis of engine performance anomalies or faults, should they occur, may be required to meet stringent delivery schedules. In many cases an experienced engineer may not be readily available to assess the fault root cause and provide guidance on corrective action. Accordingly, test cell technicians may be called upon instead.

Test cell technicians, while generally well qualified, may not possess the expertise or experience to perform fault isolation and repair efforts in an efficient and optimal manner. Accordingly, such test cell technicians may perform such fault isolation and repair efforts in a manner that is inefficient and/or otherwise less than optimal, or may choose to wait for the availability of engineering personnel, which can result in time delays and/or other costs of time and/or money.

Accordingly, there is a need for an apparatus or method for enabling such cell technicians, and/or others implementing an acceptance testing procedure, to better perform such acceptance testing procedures, and/or to diagnose complex or ambiguous testing problems, improve fault isolation and/or repair processes, and/or to reduce cycle time and/or test cell occupancy time. The present invention addresses at least this need. Furthermore, other desirable features and characteristics of the present invention will become apparent from the subsequent detailed description of the invention and the appended claims, taken in conjunction with the accompanying drawings and this background of the invention.

SUMMARY OF THE INVENTION

The present invention provides a method for diagnosing potential faults reflected in operational data for a turbine engine. In one embodiment, and by way of example only, the method comprises the steps of generating a diagnostic pattern for the operational data and comparing the diagnostic pattern with a plurality of historical patterns, to thereby identify one or more likely potential faults reflected in the operational data. The diagnostic pattern comprises a plurality of scalars. Each scalar represents an arithmetic relationship between values of the operational data and values predicted by a baseline thermodynamic model that represents the average engine performance. Each historical pattern is linked to one or more specific faults.

The invention also provides a program product for diagnosing potential faults reflected in operational data for a turbine engine. In one embodiment, and by way of example only, the program product comprises a program, and a computer-readable signal bearing media bearing the program. The program is configured to generate a diagnostic pattern for the operational data, and compare the diagnostic pattern with a plurality of historical patterns, to thereby identify one or more likely potential faults reflected in the operational data. The diagnostic pattern comprises a plurality of scalars. Each scalar represents an arithmetic relationship between values of the operational data and values predicted by a baseline thermodynamic model. Each historical pattern is linked to one or more specific faults.

In another embodiment, and by way of example only, the program product comprises a program, and a computer-readable signal bearing media bearing the program. The program is configured to generate a matrix of operating parameter perturbations to simulate a plurality of engine faults, run the matrix through the baseline thermodynamic model, to thereby generate a historical pattern for each fault, generate a diagnostic pattern for the operational data, compare the diagnostic pattern with a plurality of historical patterns, to thereby identify multiple likely potential faults based at least in part on the comparison of the diagnostic pattern with the plurality of historical patterns, assign probability values to each of the identified likely potential faults based at least in part on the comparison between the diagnostic pattern and the plurality of historical patterns, each probability value representing a probability that the engine has a particular fault, and generate user instructions for further diagnosis of the multiple likely potential faults, based at least in part on the assigned probability values. The diagnostic pattern comprises a plurality of scalars. Each scalar represents an arithmetic relationship between values of the operational data and values predicted by the baseline thermodynamic model. Each historical pattern is linked to one or more specific faults, and represents a deviation from the baseline thermodynamic model resulting from the fault. Each likely potential fault has a different historical pattern.

BRIEF DESCRIPTION OF THE DRAWINGS

FIG. 1 is a flowchart depicting an exemplary embodiment of a diagnostic process for diagnosing potential faults reflected in operational data for a turbine engine undergoing testing;

FIG. 2 is a functional block diagram depicting an exemplary embodiment of an automated engine diagnostic program that can be used to implement the diagnostic process of FIG. 1;

FIG. 3 is a functional block diagram depicting an exemplary embodiment of a computer system that can be used in implementing the automated engine operating program of FIG. 2, and in implementing the diagnostic process of FIG. 1,

FIG. 4 is a flowchart depicting an exemplary embodiment of a second diagnostic process for diagnosing potential faults reflected in operational data for a turbine engine undergoing testing;

FIGs. 5A-5C are flowcharts depicting an exemplary embodiment of a fault classification process for classifying various potential faults that an engine, such as the engine of FIG. 1, may be experiencing, which can be used in implementing the diagnostic process of FIG. 1 and the second diagnostic process of FIG. 2;

FIG. 6 is a flowchart depicting an exemplary embodiment of a no fault classification process for computing confidence values that an engine, such as the engine of FIG. 1, does not have any particular faults, that can be used in tandem with the fault classification process of FIGs. 5A-5C and in implementing the diagnostic process of FIG. 1 and the second diagnostic process of FIG. 2;

FIGs. 7A-7D are flowcharts depicting an exemplary embodiment of a fault severity classification process for calculating the severity of various faults that may be present in an engine, such as the engine of FIG. 1, that can be used in tandem with the fault classification process of FIGs. 5A-5C and in implementing the diagnostic process of FIG. 1 and the second diagnostic process of FIG. 2;

FIG. 8 depicts a main screen that can be displayed by a user interface, for example in the diagnostic process of FIG. 1;

FIG. 9 depicts an exemplary embodiment of a performance margins window that can be displayed by a user interface, for example in the diagnostic process of FIG. 1;

FIG. 10 depicts an exemplary embodiment of a diagnostic page that can be displayed by a user interface, for example in the diagnostic process of FIG. 1;

FIG. 11 depicts an exemplary embodiment of a graphical display of library diagnostic scalar fault patterns that can be displayed by a user interface, for example in the diagnostic process of FIG. 1; and

FIG. 12 depicts an exemplary embodiment of a maintenance window that can be displayed by a user interface, for example in the diagnostic process of FIG. 1.

DETAILED DESCRIPTION OF A PREFERRED EMBODIMENT

Before proceeding with the detailed description, it is to be appreciated that the described embodiment is not limited to use in conjunction with a particular type of turbine engine, or to turbine engines in general. Thus, although the present embodiment is, for convenience of explanation, depicted and described as being implemented in connection with a turbine engine, it will be appreciated that it can be implemented in connection with various other devices, systems, and/or environments.

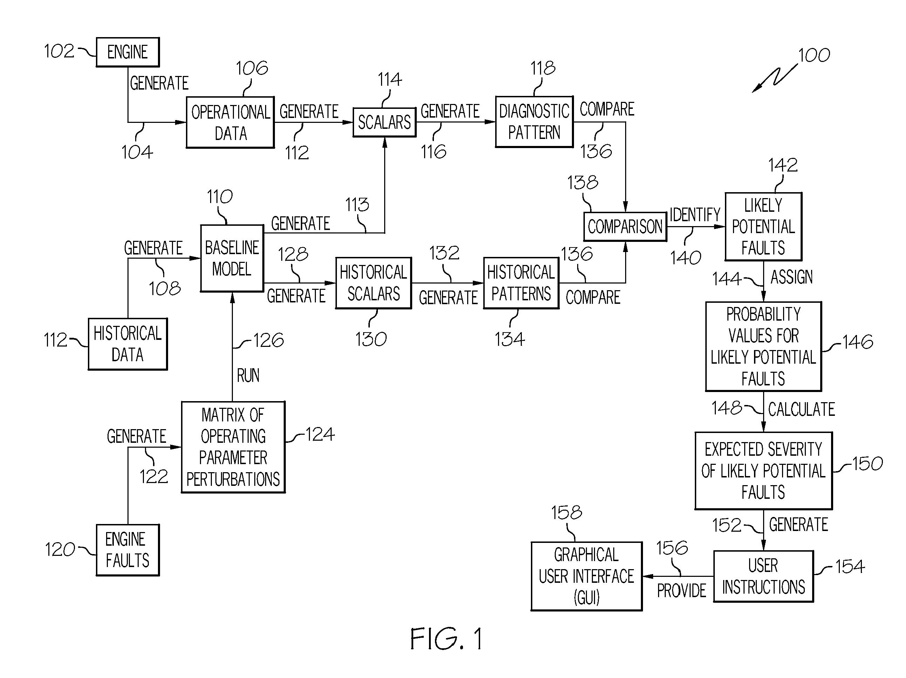

FIG. 1 depicts an exemplary embodiment of a diagnostic process 100 for diagnosing potential faults reflected in operational data 106 for a turbine engine 102 undergoing testing. As depicted in FIG. 1, the diagnostic process 100 begins with step 104, in which the operational data 106 is generated. The turbine engine 102 may be undergoing testing because it has been recently manufactured, repaired, or overhauled, or for any one of a number of other reasons. The operational data 106 preferably includes measurements of multiple parameters and/or variables reflecting engine operational conditions, and/or various other parameters and/or variables pertaining to the engine 102 and/or the operation thereof. By way of example only, the operational data 106 may include values for measured gas generator rotational speed, measured gas temperature, measured engine output torque, measured output shaft rotational speed, measured rotor speed, measured compressor discharge pressure, measured compressor discharge temperature, measured inlet temperature, measured inlet pressure, measured exhaust pressure, and/or various other variables and/or parameters.

Meanwhile, in step 108, a baseline model 110 (preferably a baseline thermodynamic model) is generated from historical data 112. The baseline model 110 preferably reflects expected or ideal operating conditions for an engine without any faults or wear. The historical data 112 preferably reflects typical or average measured values of various variables and/or parameters, preferably similar to those represented in the operational data 106. However, the historical data 112 preferably represents average measured values of such variables and/or parameters over the operation of a large number of engines, for example in a large fleet of vehicles using a similar type of engine. The historical data 112 and the baseline model 110 will thus be used as baseline measures, with which to compare the operation of the engine 102 engine being tested, as represented in the operational data 106 thereof.

Next, in step 113, engine component scalars 114 are generated for the engine 102 being tested, based on the operational data 106 and the baseline model 110. Each engine component scalar 114 represents a mathematical relationship between values of the operational data 106 and values predicted by the baseline model 110 that preferably represents the average engine performance. The engine component scalars 114 adjust component efficiency, component flow capacity, and component pressure rise to match the operational data. Each component is scaled in such a way as to capture the true physics of the engine operation due to the deviation of any hardware. The methodology used to scale the components allows for the creation of unique signatures. Step 113 preferably includes normalization of the operational data 106 to facilitate comparison with the baseline model 110 and generation of the engine component scalars 114; however, this may vary in different embodiments. Other diagnostic scalars may also be used.

The engine component scalars 114 used in the diagnostic process 100, and the diagnostic scalars used in the various processes described herein, can greatly improve the accuracy of these processes, and the diagnostic tools used in connection therewith, for example because diagnostic scalars contain pertinent information on component interaction and physics based on how the scalars are derived. Preferably, the engine component scalars 114 and/or other diagnostic scalars are derived by using a physics based model and scaling each component in that model until the model calculated parameter matches the measured parameter. In a preferred embodiment, the physics based model maintains continuity of mass, momentum, and energy during this scaling process, and preferably conducts multiple iterations using a Newton-Raphson method to help utilize the diagnostic component scalars to match data.

The Newton-Raphson method is a known method that can be used to solve partial differential equations in engine thermodynamic models. As used in the present invention, the Newton-Raphson method can be conducive to the use of diagnostic component scalars to match data. For example, the Newton-Raphson method allows each component to be scaled such that the thermodynamic calculated parameter matches the measured test parameter while satisfying continuity of mass, momentum, and energy. These scalars are added to the matrix that Newton-Raphson solves.

For the engine component scalars 114 (and/or other diagnostic scalars used in the various processes described herein), appropriate scalars for each component are chosen, and their relationship to each other is specified such that the appropriate physics are modeled. These scalars adjust component efficiency, component flow capacity, and component pressure rise to match the operational data. Each component is scaled in such a way as to capture the true physics of the engine operation due to the deviation of any hardware. The methodology used to scale the components allows for the creation of unique signatures. An example is compressor scaling to match measured compressor discharge temperature, compressor discharge pressure, and measured inlet airflow. In this example, compressor efficiency at constant pressure rise based on a component map is scaled to match the measured temperature rise across the compressor, the model compressor efficiency at constant work based on a component map is scaled to match the measured pressure rise across the compressor. The compressor flow scalar is then adjusted to ensure that the compressor is scaled along the tested compressor operating line which is set by the tested gas generator flow capacity. The gas generator flow capacity is then scaled to match the measured airflow going into the engine while accounting for all secondary cooling flows. This example shows the interaction of each component to match the data. It will be appreciated that this will vary appropriately in different examples, and using different engine components, parameters, and/or scalars.

Preferably, at least some of the engine component scalars 114 represent multiplicative relationships between values of the operational data 106 and values predicted by the baseline model 110, and at least some of the engine component scalars 114 represent additive relationships between values of the operational data 106 and values predicted by the baseline model 110. However, this may vary in certain embodiments. Also, preferably at least some of the engine component scalars 114 represent a relationship between a first operational value from the operational data 106 and an expected value of the first operational value, in which the expected value of the first operational value is based on a second operational value from the operational data 106 and a known relationship between the first and second operational values, based at least in part on one or more laws of physics. However, this may also vary in certain embodiments. As will be discussed further below, regardless of their exact number and makeup, the engine component scalars 114 will be used to help identify potential faults in the engine 102 being tested.

Next, in step 116, a diagnostic pattern 118 is generated from the engine component scalars 114. The diagnostic pattern 118 represents a signature belonging to the engine 102 being tested, based on the operational data 106. Preferably, the diagnostic pattern 118 includes at least several engine component scalars 114 that will be used in helping to identify potential faults in the engine 102 being tested, as described in greater detail further below.

Meanwhile, in step 122, a matrix 124 of operating parameters is generated for various potential engine faults 120. For example, for testing purposes only, various faults may be selectively introduced into certain engines in a testing center in order to determine the matrix 124 of operating parameters for such various faults. Other techniques, for example use of data from prior experiments, numerical simulations in which various operating parameters are pertubated, literature in the field, and/or from various other sources, may also be used in certain embodiments. Regardless of how the matrix 124 is generated, the matrix 124 is then, in step 126, run through the baseline model 110, so as to selectively introduce various faults into the baseline model 110 in a controlled environment for testing purposes.

Next, in step 128, historical scalars 130 are generated, based on the changes to the baseline model 110 after the introduction of the matrix 124 in step 126. Each historical scalar 130 represents an arithmetic relationship between values of the historical data 112 and the baseline model 110. Preferably, at least some of the historical scalars 130 represent multiplicative relationships between values of the historical data 112 and the baseline model 110, and at least some of the historical scalars 130 represent additive relationships between values of the historical data 112 and values predicted by the baseline model 110. However, this may vary in certain embodiments.

Next, in step 132, various historical patterns 134 are generated from the historical scalars 130. Preferably, each historical pattern 134 is linked to one specific engine fault, for subsequent use in identifying one or more likely potential faults that may be reflected in the operational data 106 pertaining to the engine 102 being tested. Specifically, each historical pattern 134 preferably includes at least several historical scalars 130, the combination of which can be linked to one or more potential engine faults. It will be appreciated that various of the steps 104-132, along with various other steps of the diagnostic process 100, may be conducted simultaneously or in either order. For example, the baseline model 110, the matrix 124, the historical scalars 130, and/or the historical patterns 134 may be generated simultaneously with, before, or after the engine component scalars 114 and/or the diagnostic pattern 118, and/or various other steps may occur in different orders, regardless of the order depicted in FIG. 1 or described herein.

Next, in step 136, the diagnostic pattern 118 is compared with the historical patterns 134, to thereby generate a comparison 138. The comparison 138 may include, by way of example only, a listing or ranking of which historical patterns 134 are closest to the diagnostic pattern 118, measures of difference between the diagnostic pattern 118 and the various historical patterns 134, and/or various other measures of comparison therebetween. The comparison 138 is then utilized, in step 140, to identify the most likely potential faults 142 for the engine 102 being tested. In a preferred embodiment the three most likely potential faults 142 are identified in step 140. However, this may vary.

The likely potential faults 142 are then assigned, in step 144, probability values 146, each probability value representing a likelihood that a particular likely potential fault 142 is present in the engine 102 being tested. In addition, in step 148, the likely potential faults 142 are assigned expected severity levels 150, representing the likely severity of each likely potential fault 142 if such likely potential fault 142 is present in the engine 102 being tested. The probability values 146 and the expected severity levels 150 are preferably generated at least in part based on the comparison 138 generated in step 136. The probability values 146 and the expected severity levels 150 can then be used by a technician or other user to appropriately further investigate and/or address the likely potential faults 142.

Specifically, user instructions 154 are then generated in step 152, and are provided to the user in step 156 in the form of a graphical user interface (GUI) 158. Preferably, the user instructions 154 and the GUI 158 provide the user with detailed information regarding the diagnostic pattern 118, the likely potential faults 142, and the probability values 146 and the expected severity levels 150 thereof.

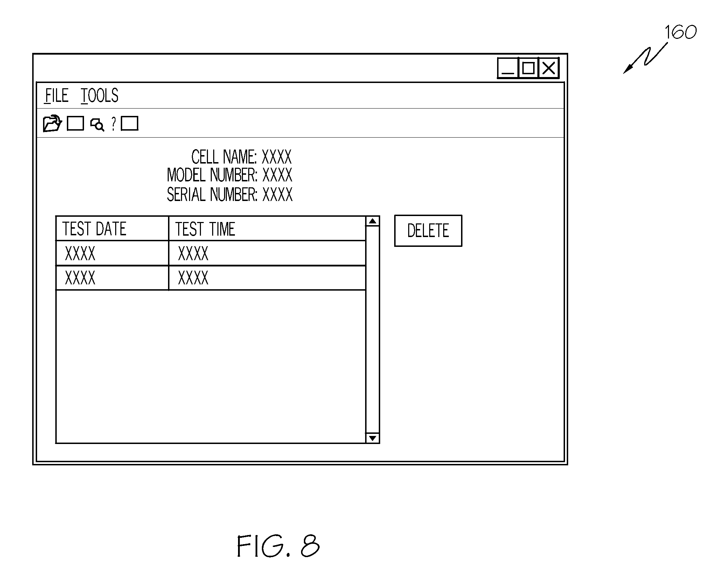

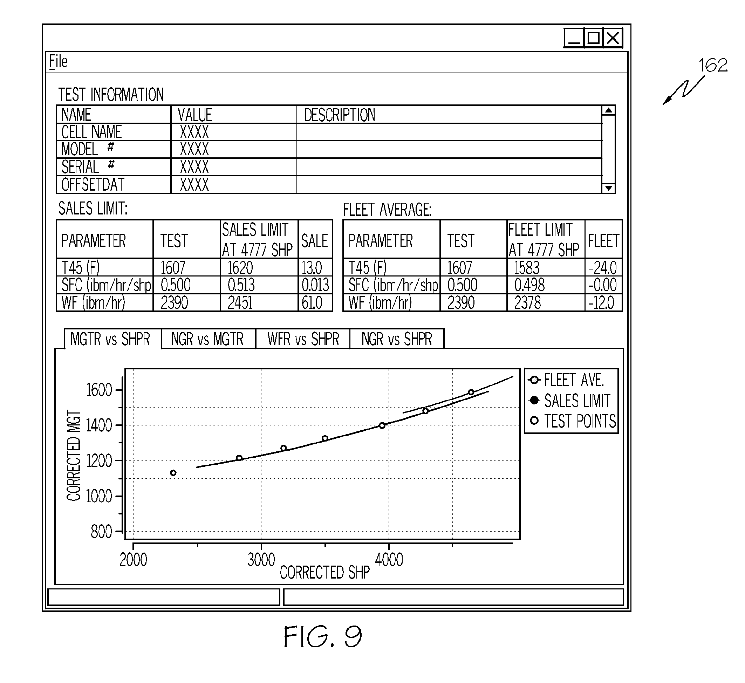

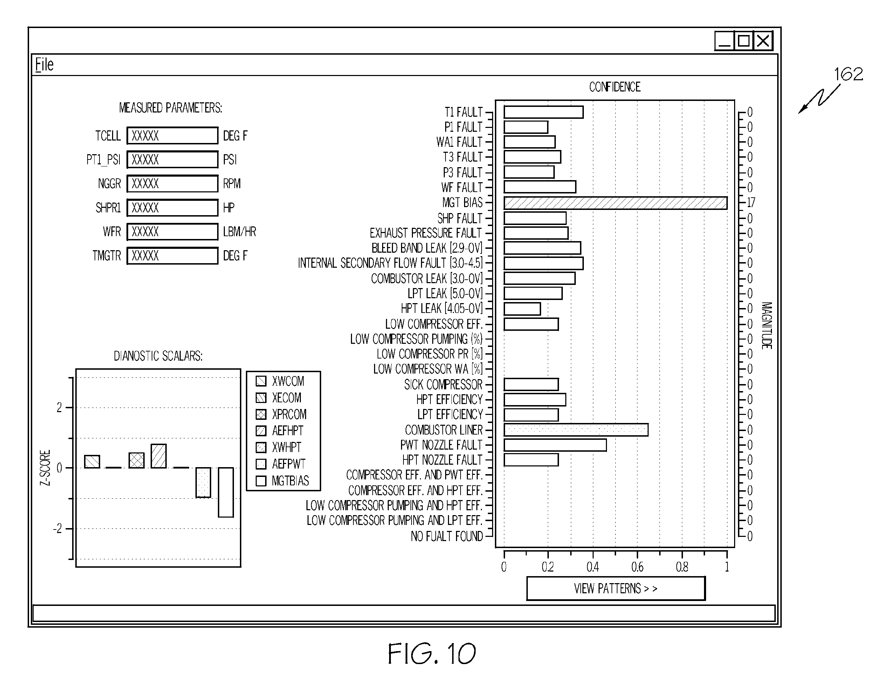

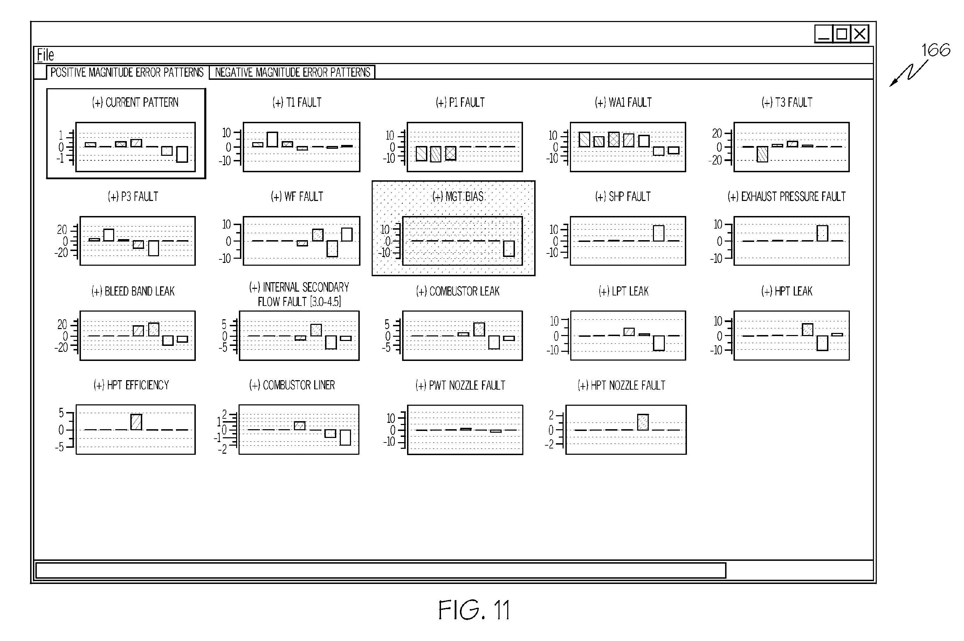

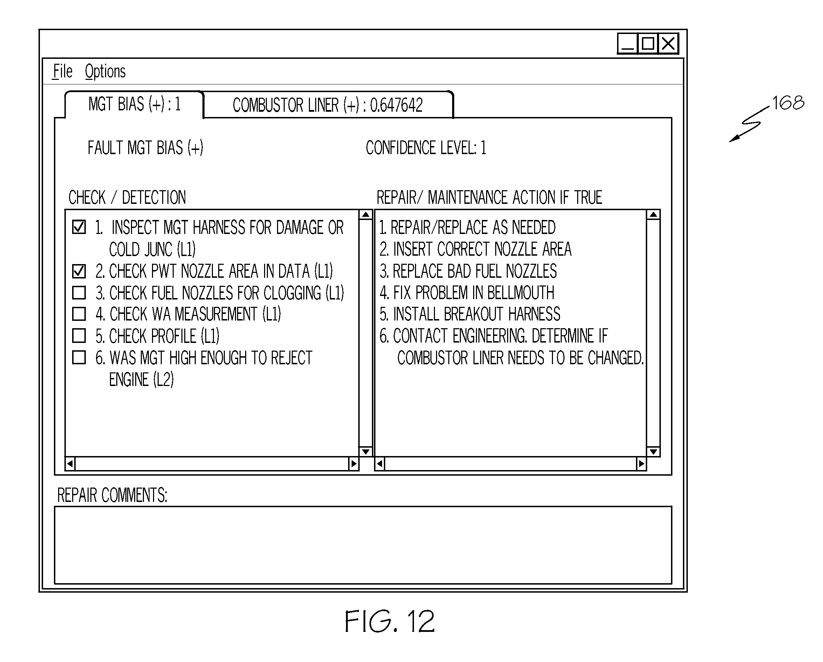

Examples of various display screens that may be displayed by the GUI 158 in an exemplary embodiment are depicted in FIGs. 8-12. Specifically, FIG. 8 displays a main screen 160, from which a user can select a results output file, which contains diagnostic results and other information, re-run test data, view performance margins, view diagnostics and fault patterns, and view recommended check and repair actions and/or other maintenance actions. FIG. 9 depicts a performance margins window 162 that shows how much margin the engine had to requirement, as well as engine referred data relative to requirement and fleet average. FIG. 10 depicts a diagnostic page 164 that contains a diagnostic scalar fault pattern (displayed in this embodiment in the lower left hand corner) as well as a probability of fault (displayed in this embodiment by a bar chart with a severity value to the right of each bar). FIG. 11 depicts a graphical display 166 of library diagnostic scalar fault patterns from the fault library described herein. FIG. 12 depicts a maintenance (check and repair) window 168 that (i) provides user instructions on actions to take and (ii) records user actions taken and notes into engine database. It will be appreciated that the display screens may vary from those depicted in FIGs. 8-12, that different display screens or techniques may also be used, and/or that these display screens, and/or variations thereof, may also be used in connection with the other processes, programs, and devices described below.

The GUI 158, and the user instructions 154 and other pages and information displayed therein, can thus provide the user with an efficient roadmap for diagnosing and/or repairing any faults in the engine 102 being tested, potentially saving significant time and costs. It will be appreciated that the diagnostic process 100, and/or various other processes, methods, apparatus, and systems described below, can be implemented in connection with various different types of turbine engines, and/or various other engines, vehicles, devices, systems, and/or environments.

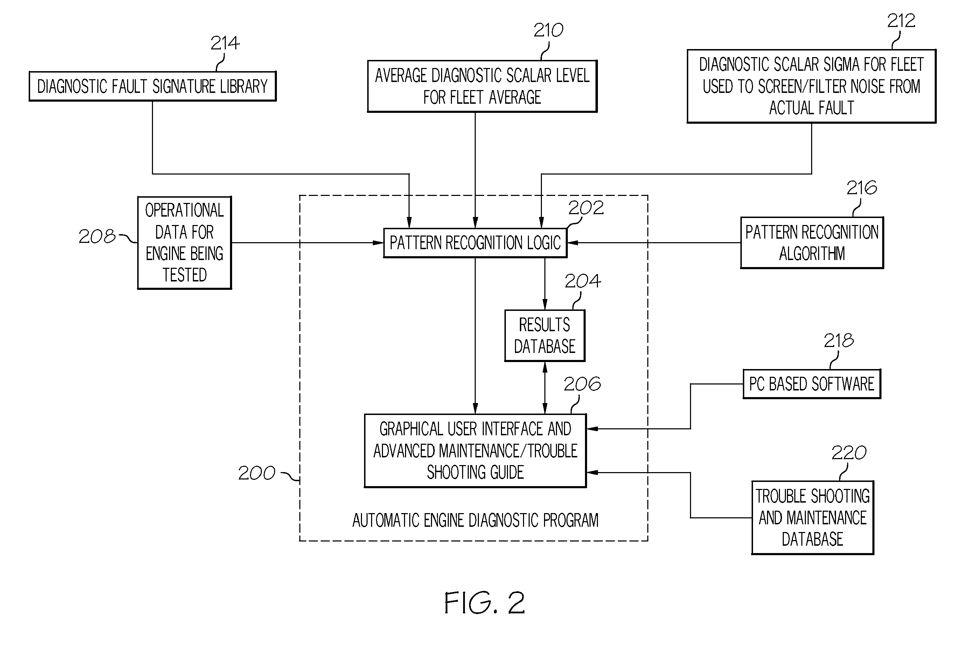

Turning now to FIG. 2, a functional block diagram is shown for an automated engine diagnostic program 200 that can be used to implement the diagnostic process 100 of FIG. 1, and the various other processes described below. The automated engine diagnostic program 200 includes pattern recognition logic 202, a results database 204, and a graphical user interface trouble shooting guide 206.

The pattern recognition logic 202 is coupled to receive operational data 208 for an engine being tested, as well as average diagnostic scalar levels 210 and diagnostic scalar deviation measures 212. The pattern recognition logic 202 is configured to generate a diagnostic pattern for the engine being tested. The diagnostic pattern includes a plurality of scalars representing the operational data 208, which are preferably calculated based also at least in part on the average diagnostic scalar levels 210 and the diagnostic scalar deviation measures 212.

The pattern recognition logic 202 is further configured to compare the generated diagnostic pattern with historical patterns received from a diagnostic fault signature library 214, using a fault pattern recognition algorithm 216. The resulting comparisons are stored in the results database 204. The results are retrieved by the graphical user interface trouble shooting guide 206, which generates the above-described user instructions therefrom, using software 218 (preferably a PC based software) and a trouble shooting and maintenance database 220.

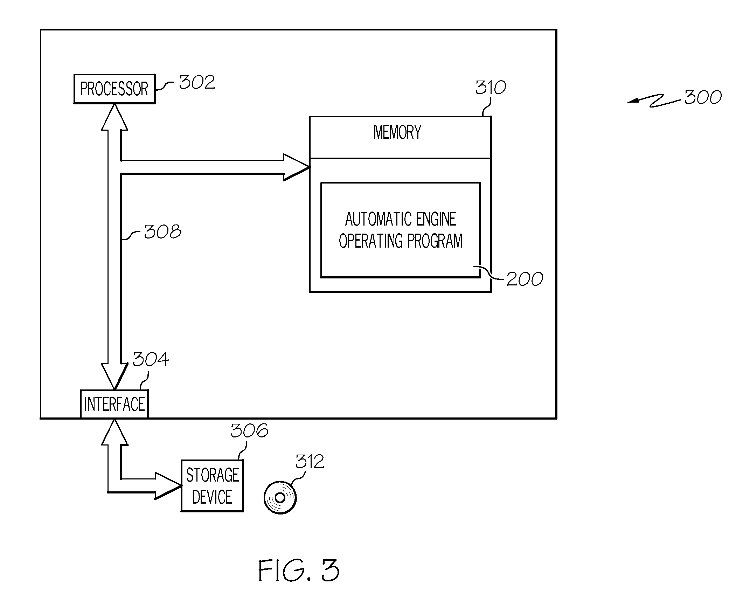

Turning now to FIG. 3, an exemplary computer system 300 is illustrated, by way of example only, for implementing the automated engine diagnostic program 200 of FIG. 2, and that can also be used in implementing the diagnostic process 100 of FIG. 1, and the various other processes described below. The computer system 300 illustrates the general features of a computer system that can be used in implementing the automated engine diagnostic program 200 and these processes. Of course, these features are merely exemplary, and it should be understood that the computer system 300 can include different types of hardware that can include one or more different features. It should be noted that the computer system 300 can be implemented in many different environments, such as within a particular apparatus or system, or remote from a particular apparatus or system. Nonetheless, the exemplary computer system 300 includes, in addition to the above-described automated engine diagnostic program 200, a processor 302, an interface 304, a storage device 306, a bus 308, and a memory 310.

The processor 302 performs the above-described computation and control functions of the computer system 300, and may comprise any type of processor, include single integrated circuits such as a microprocessor, or may comprise any suitable number of integrated circuit devices and/or circuit boards working in cooperation to accomplish the functions of a processing unit. The processor 302 may comprise multiple processors implemented on separate systems. During operation, the processor 302 executes the programs contained within the memory 310 (such as the automated engine diagnostic program 200) and, as such, controls the general operation of the computer system 300.

The memory 310 can be any type of suitable memory. This would include the various types of dynamic random access memory (DRAM) such as SDRAM, the various types of static RAM (SRAM), and the various types of nonvolatile memory (PROM, EPROM, and flash). It should be understood that the memory 310 may be a single type of memory component, or it may be composed of many different types of memory components. In addition, the memory 310 and the processor 302 may be distributed across several different computers that collectively comprise the computer system 300. For example, a portion of the memory 310 may reside on a computer within a particular apparatus or process, and another portion may reside on a remote computer.

The bus 308 serves to transmit programs, data, status and other information or signals between the various components of the computer system 300. The bus 308 can be any suitable physical or logical means of connecting computer systems and components. This includes, but is not limited to, direct hard-wired connections, fiber optics, infrared and wireless bus technologies.

The interface 304 allows communication to the computer system 300, and can be implemented using any suitable method and apparatus. The interface 304 may also include one or more network interfaces to communicate to other systems, terminal interfaces to communicate with technicians, and storage interfaces to connect to storage apparatuses such as the storage device 306.

The storage device 306 can be any suitable type of storage apparatus, including direct access storage devices such as hard disk drives, flash systems, floppy disk drives and optical disk drives, among various other types of storage apparatus. In the embodiment of FIG. 3, the storage device 306 comprises a disk drive device that uses disks 312 to store data.

During operation, the automated engine diagnostic program 200 is stored in the memory 310 and executed by the processor 302. Other programs may also be stored in the memory 310 and executed by the processor 302. As one example implementation, the computer system 300 may also utilize an Internet website, for example, for providing or maintaining data or performing operations thereon.

It should be understood that while the embodiment is described here in the context of a fully functioning computer system, those skilled in the art will recognize that the mechanisms of the present invention are capable of being distributed as a program product in a variety of forms, and that the present invention applies equally regardless of the particular type of computer-readable signal bearing media used to carry out the distribution. Examples of signal bearing media include: recordable media such as floppy disks, hard drives, memory cards and optical disks (e.g., disk 312), and transmission media such as digital and analog communication links, among various other different types of signal bearing media.

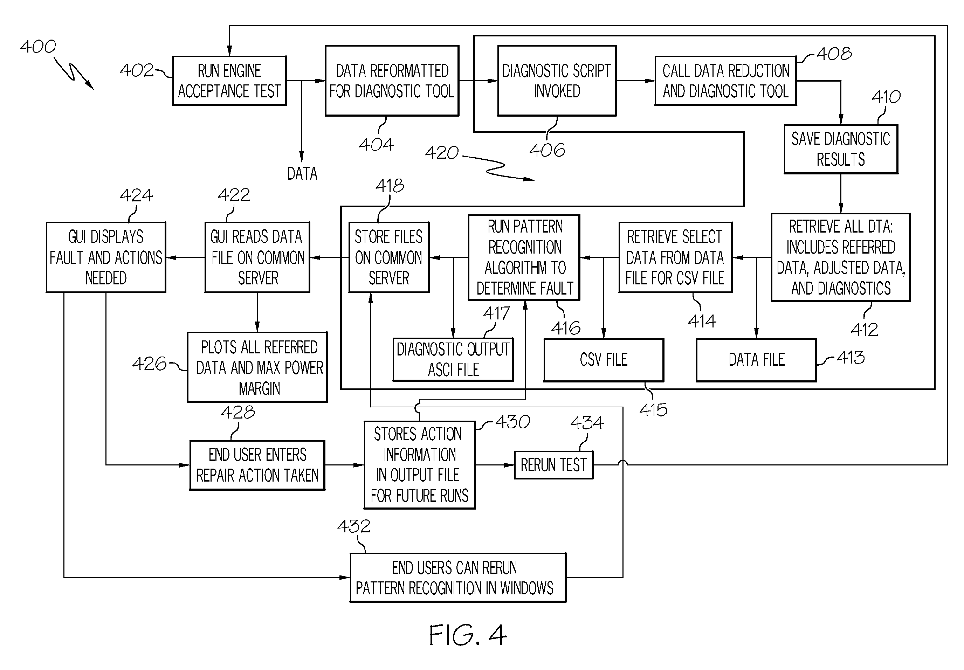

Turning now to FIG. 4, an exemplary embodiment of a second diagnostic process 400 is depicted, which may contain various steps similar to the above-described diagnostic process 100 of FIG. 1. As depicted in FIG. 4, the second diagnostic process 400 begins with step 402, in which an engine acceptance test is run on an engine, such as the engine 102 being tested as referenced in FIG. 1, and/or a plurality of different engines, thereby generating data, such as the operational data 106 referenced in FIG. 1 and/or other data. Next, in step 404, the data is re-formatted for use by one or more diagnostic tools.

Next, in step 406, a diagnostic script is invoked. A data reduction and physics based diagnostic tool is then called in step 408 to generate diagnostic scalar results pertaining to the engine (preferably using engine component scalars such as those described above in connection with FIG. 1), which are then stored in step 410. These diagnostic scalar results, along with various other referred data and adjusted data, are then, in step 412, retrieved and stored in a data file 413. Select data from this data file 413 is then, in step 414, retrieved and stored in another file, preferably a comma separated value (CSV) file 415, and a pattern recognition algorithm is then run in step 416, using the select data, thereby generating fault probability and severity output that is stored in a results output file 417. The fault probability and severity output is then stored in step 418, preferably along with the other data, on a common server, and the fault probability and severity output and other data are supplied to a user interface. Steps 406 - 418 are also collectively referenced in FIG. 4 as a collective step 420, representing a portion of the second diagnostic process 400 that is conducted invisible to the user, and prior to any display on a user interface.

Next, the user interface reads, in step 422, the data and output from the data file 413, the CSV file 415, and the results output file 417, and displays, in step 424, appropriate user instructions based on this data and output. Preferably, the user instructions include at least one potential engine fault (if a fault is diagnosed), along with any additional diagnostic steps or remedial action that may be required by the user. Next, in step 428, the user takes appropriate action based on the user instructions, and then inputs the action taken into the user interface, and this information is stored by the user interface in step 430 for use in future iterations. Next, the process returns to step 416, and steps 416-430 are repeated for different engine faults. Upon the completion of steps 416-430 for each of the engine faults, the test may optionally be re-rerun in step 434. Alternatively, after the user interface has displayed the user instructions in step 424, the user can, in step 432, optionally re-run the diagnostic pattern recognition, returning the process to step 418.

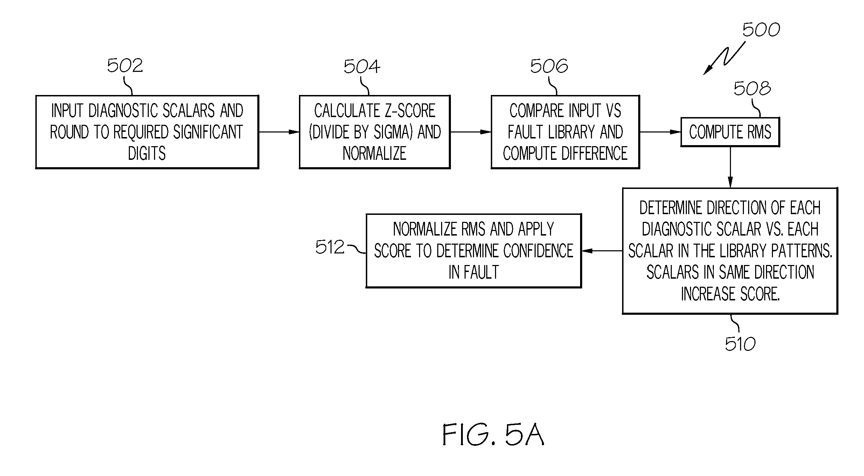

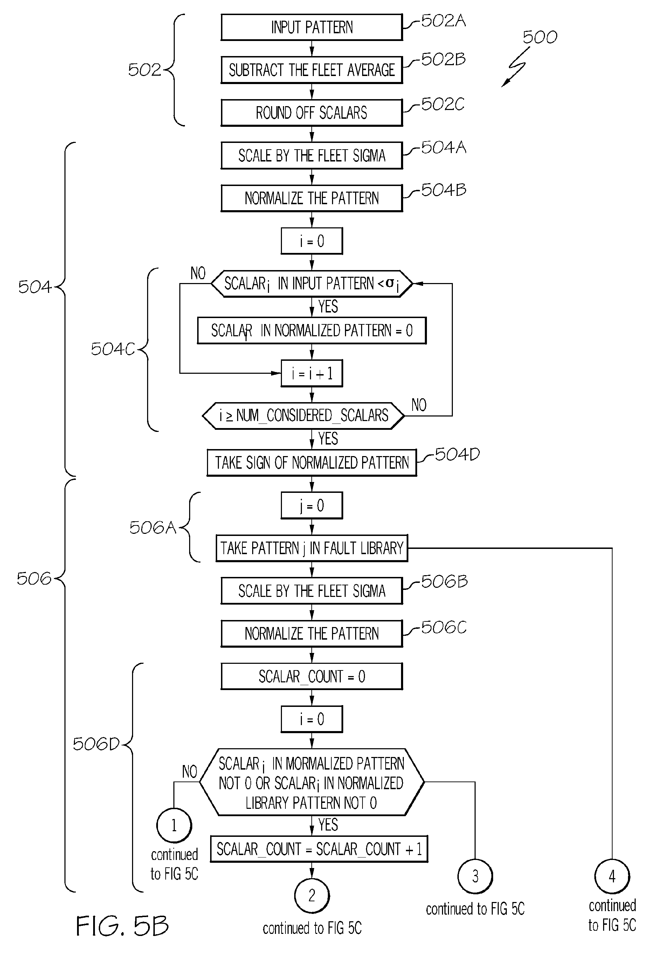

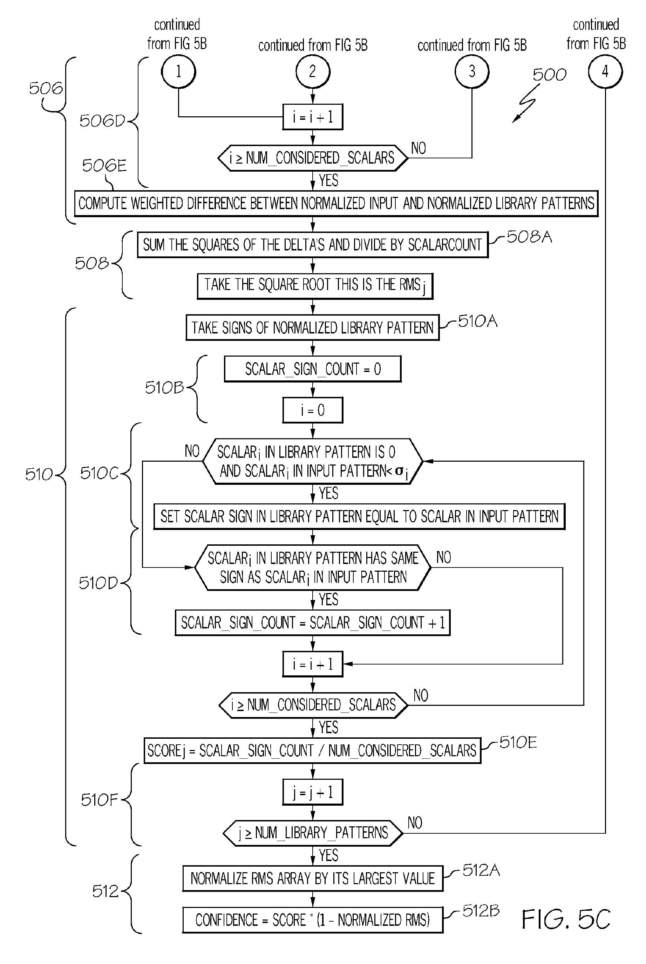

FIGs. 5A-5C depict an exemplary embodiment of a fault classification process 500 for classifying various potential faults that an engine, such as the engine 102 being tested in FIG. 1, may be experiencing. Specifically, FIG. 5A shows a simplified, high-level flowchart of the steps of the fault classification process 500, while FIGs. 5B and 5C provide a more detailed flowchart depicting various exemplary sub-steps of the steps depicted in FIG. 5A. The fault classification process 500 may be implemented in connection with the diagnostic process 100 of FIG. 1 (for example, in some or all of steps 104-144 therein), the second diagnostic process 400 of FIG. 4 (for example, in some or all of steps 402-418 therein), and various other processes. FIGs. 5A-5C will be discussed together below.

The fault classification process 500 begins in step 502, in which a diagnostic pattern of a plurality of diagnostic scalars (preferably engine component scalars such as those described above in connection with FIG. 1) for an engine being tested are input into a program (step 502A), and each such diagnostic scalar is subtracted by the fleet average scalar (step 502B) and rounded to a predetermined number of significant digits (step 502C). Preferably, the fleet average, along with a corresponding deviation (sigma) value are input into the algorithm, based on the particular type of engine being tested. In a preferred embodiment, the diagnostic scalars include various multiplicative scalars (XWCOM - compressor flow scalar, XECOM - compressor efficiency scalar, XPRCOM - compressor pressure rise scalar and XWHPT - gas generator flow scalar) each rounded to three significant digits, various additive scalars and flow functions (AEHPT - gas generator efficiency adder, AELPT - power turbine efficiency adder, GAM41 - flow function gas generator nozzle and GAM45 - flow function power turbine nozzle) each rounded to one significant digits, and a measured gas temperature bias (MGTBIAS - MGT Bias is equal to the thermodynamic gas generator turbine exit temperature, which is a function of measured airflow, fuel flow, secondary cooling flow, and work performed by the gas generator turbine, subtracted by the measured gas generator exit temperature) rounded to one significant digit. However, various other scalars may be used, and the number of scalars, types of scalars, and significant digits used can vary in different embodiments.

Next, in step 504, a Z-score is calculated for each diagnostic scalar, and is then normalized. Specifically, each diagnostic scalar is divided by a corresponding fleet sigma deviation value to bring each of the diagnostic scalars to a comparable scale, preferably in terms of multiples of the sigma deviation value (step 504A). Preferably, the diagnostic scalars are then normalized within the sigma-scaled pattern according to the largest value (step 504B). The process then loops through each of the diagnostic scalars, and if a diagnostic scalar is smaller, in absolute value, than the corresponding sigma deviation value in the diagnostic pattern, such diagnostic scalar is set to zero in the normalized pattern (step 504C). Regardless of the signs of the diagnostic scalars, such signs are noted and/or stored for subsequent use (step 504D).

Next, in step 506, the diagnostic scalars are compared with respective historical scalars from a fault library, and measures of difference are computed therebetween. Specifically, the processing of a main loop for such comparison is started through the fault library (step 506A). The index starts at zero for all loops, and the first historical scalar in the fault library is therefore labeled as historical scalar zero. The library historical scalars are preferably stored as delta values, representing deviations from nominal values, and therefore there is no need to subtract the fleet average. However, since the fleet sigma deviation value may change, scaling is preferably performed (step 506B). The scaled library historical scalars are preferably normalized by the largest scalar in the pattern (step 506C). This normalization step ensures that all the historical scalars are between $\pm 1$, and brings the historical scalars to the same severity level so that the classification algorithm does not need to worry about severities. The process counts the number of diagnostic scalars for which the scalar in at least either the diagnostic pattern or the library historical scalar pattern is larger than the fleet sigma (step 506D), so that only the diagnostic scalars that contribute to the root mean square are included in the calculation. In addition, in step 506E, a weighted difference is calculated for each diagnostic scalar between the normalized input and library historical scalars, in accordance with Equation 1 below:

$$\Delta_j^i = w^i \times \left( scalar_{normalized\ library\ pattern\ j}^i - scalar_{normalized\ input\ pattern}^i \right) \quad (1),$$

in which different weights are defined for various diagnostic scalars. For example, in the depicted embodiment, the weights $w^i$ are defined to be equal to 1.0 for the following diagnostic scalars: XWCOM, XECOM, XPRCOM, AEHPT, XWHPT and AELPT); 0.6 for the MGTBIAS diagnostic scalar, and 0.0 for the GAM41 and GAM45 diagnostic scalars. These weights can be modified by the user, and the diagnostics scalars and/or the weights assigned thereto may vary in different embodiments.

The measures of difference are then used, in step 508, to compute a root mean square (RMS) for the diagnostic pattern. Preferably, the delta deviation values computed in step 506 are squared and summed, and the result is divided by the number of diagnostic scalars computed in step 506D, in accordance with the following equation (2) (step 508A):

$$RMS_j^2 = \frac{\sum_i \Delta_j^{i\,2}}{ScalarCount} \quad (2)$$

The RMS between the diagnostic pattern and pattern j in the fault library is then calculated as the square root of the result from Equation 2, in accordance with the following equation (3) (step 508B):

$$RMS_j = \sqrt{RMS_j^2} \quad (3)$$

Then, in step 510, the RMS value is adjusted based on the respective directions of the diagnostic scalars versus corresponding historical scalars in the fault library. Specifically, the sign of each historical scalar in the fault library is determined (step 510A) and compared with the sign of each diagnostic scalar to determine how many of the respective scalars have the same sign (step 510B). The determination will be used to give a higher confidence to a fault where the largest number of scalars has the same sign in both patterns. If a historical scalar in the fault library is sufficiently small (e.g., less than the fleet sigma deviation value in a preferred embodiment), then such historical scalar is artificially changed to match that of the diagnostic scalar in the diagnostic pattern (step 510C), to account for cases in which a library historical scalar expects a scalar to be exactly zero (in which case it is not realistic for a diagnostic pattern to always have exactly zero for that scalar).

The number of scalars that have the same sign both in the diagnostic pattern and the library historical pattern are then counted (step 510D), and a score is generated for each historical pattern in the fault library (510E). Preferably, the score for each historical pattern is equal to the number of scalars with the same sign both in the diagnostic pattern and the library historical pattern divided by the total number of diagnostic scalars. Accordingly, preferably the root mean square value increases if a diagnostic scalar has the same direction as a corresponding historical scalar from the fault library, and decreases if the respective directions are different. Steps 510C and 510D repeat until each pattern in the fault library has been considered, after which the loop is exited (step 510F) and then the process proceeds to step 512, as described below.

In step 512, the RMS value is normalized and used to generate a level of confidence for each potential fault. Specifically, the RMS values obtained for each historical pattern in the fault library are preferably normalized by the largest RMS value (step 512A). The confidence for a particular fault is then calculated to be equal to the score for this fault multiplied by a value of one minus the normalized RMS for this fault (step 512B), thereby providing a value between zero and one. A higher confidence level for a particular fault represents a better match between the diagnostic pattern and the corresponding historical pattern representing the particular fault, and therefore represents an increased likelihood that the engine being tested has this particular fault.

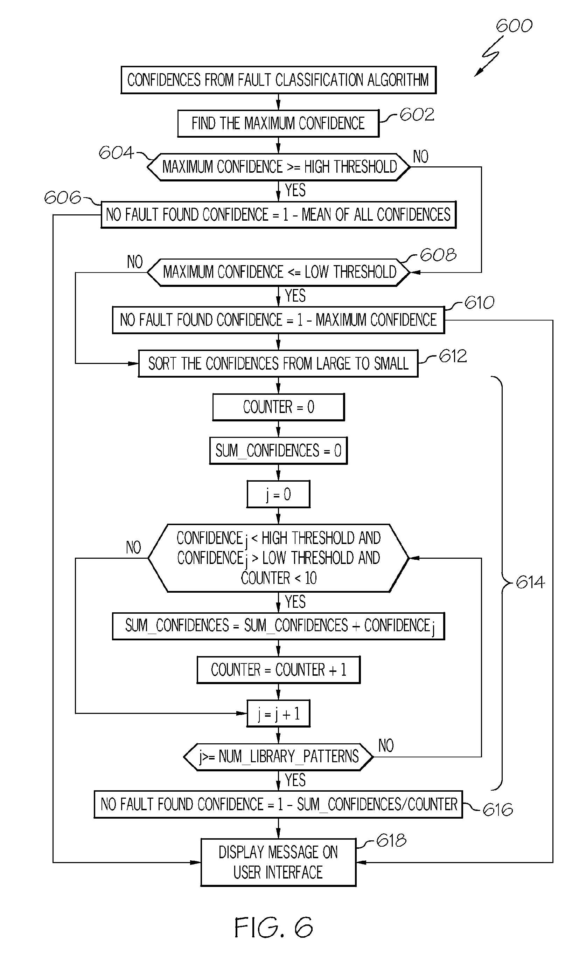

Turning now to FIG. 6, an exemplary embodiment of a no fault classification process 600 is depicted. The no fault classification process 600 is preferably conducted in tandem with, and following, the fault classification process 500 of FIG. 5. As such, the no fault classification process 600 may also be implemented in connection with the diagnostic process 100 of FIG. 1, the second diagnostic process 400 of FIG. 4, and various other processes.

Specifically, the no fault classification process 600 computes a confidence value that the diagnostic pattern does not sufficiently match any of the historical patterns in the fault library (the "no fault found confidence value"). Accordingly, no fault confidence values for a particular fault calculated by the no fault classification process 600 will be inversely related to the confidence values for the particular fault calculated by the fault classification process 500 of FIG. 5.

The no fault classification process 600 begins with step 602, in which a maximum confidence value is determined from a plurality of confidence values, preferably those computed by the fault classification process 500 of FIG. 5. Next, in step 604, a determination is made as to whether the maximum confidence value is greater than a first predetermined threshold. The first predetermined threshold is equal to 0.7 in a preferred embodiment; however, this may vary by the user, and may vary in different embodiments. If it is determined in step 604 that the maximum confidence value is greater than the first predetermined threshold, then the process proceeds to step 606, in which the no fault found confidence value is calculated to equal one minus the maximum confidence value.

Conversely, if it is determined in step 604 that the maximum confidence value is less than or equal to the first predetermined threshold, then the process proceeds to step 608, in which a determination is made as to whether the maximum confidence value is less than or equal to a second predetermined threshold. The second predetermined threshold is equal to 0.2 in a preferred embodiment; however, this may vary by the user, and may vary in different embodiments. If it is determined in step 608 that the maximum confidence value is less than or equal to the second predetermined threshold, then the process proceeds to step 610, in which the no fault found confidence value is calculated to equal one minus the average of all confidence values (preferably those obtained from the fault classification process 500 of FIG. 5).

Conversely, if it is determined in step 608 that the maximum confidence value is greater than the second predetermined threshold, then the process proceeds to step 612. In step 612, the confidence values (preferably those obtained from the fault classification process 500 of FIG. 5) are sorted in descending order from largest to smallest. Following this sorting, in step 614, a determination is made as to a plurality of the largest confidence values that are between the first and second predetermined values. In a preferred embodiment, up to ten of the largest confidence values meeting this criteria are selected; however, this may vary in other embodiments. Next, in step 616, the no fault found confidence value is calculated to equal one minus the average of the confidence values selected in step 614.

Accordingly, a single no fault found confidence value is calculated for a particular engine being tested. The single no fault found confidence value is calculated in either step 606, 610, or 616, preferably based on the fault confidence values from the fault classification process 500 of FIG. 5 and the first and second predetermined values referenced above in steps 604 and 608.

In step 618, a user interface may then display a message based on the no fault found confidence value, and also based on whether the engine being tested has passed one or more non-depicted performance tests. For example, if the no-fault confidence value is sufficiently high and the engine being tested has passed the performance tests, then a "healthy" engine message is displayed. However, if the no-fault confidence value is sufficiently high but the engine being tested has not passed the performance tests, then a message will be displayed to contact an engineer. If the no-fault confidence value is not sufficiently high, then a message will be displayed that a fault is likely. However, it will be appreciated that in various embodiments such messages and/or user displays may differ.

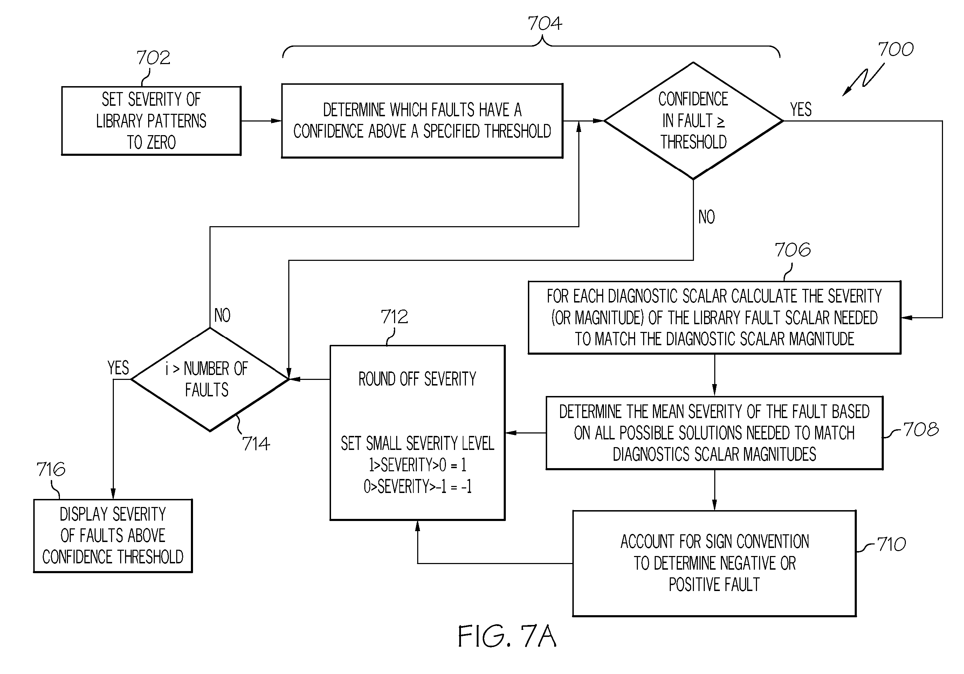

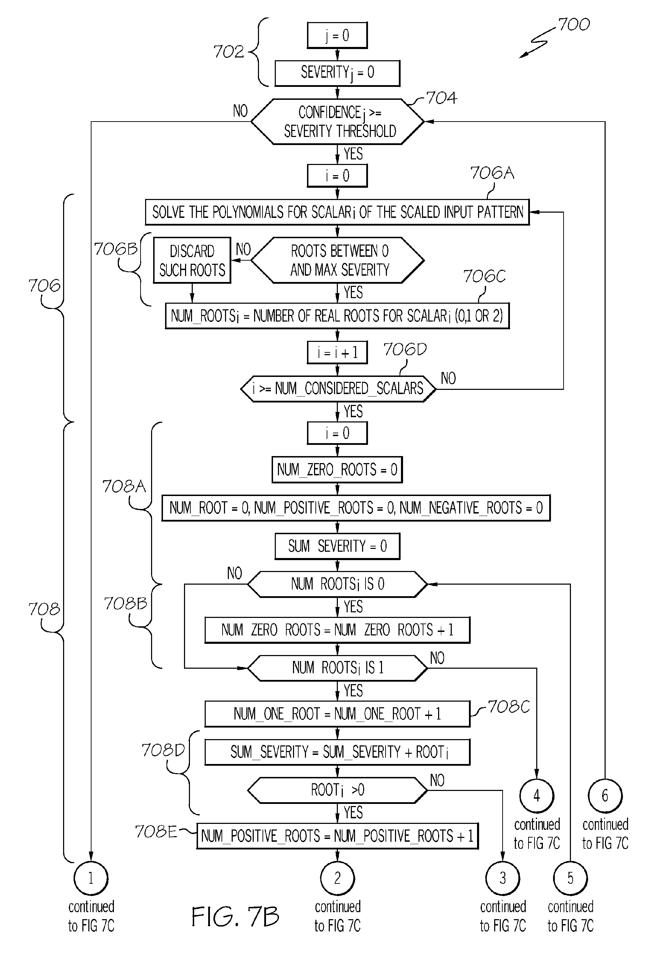

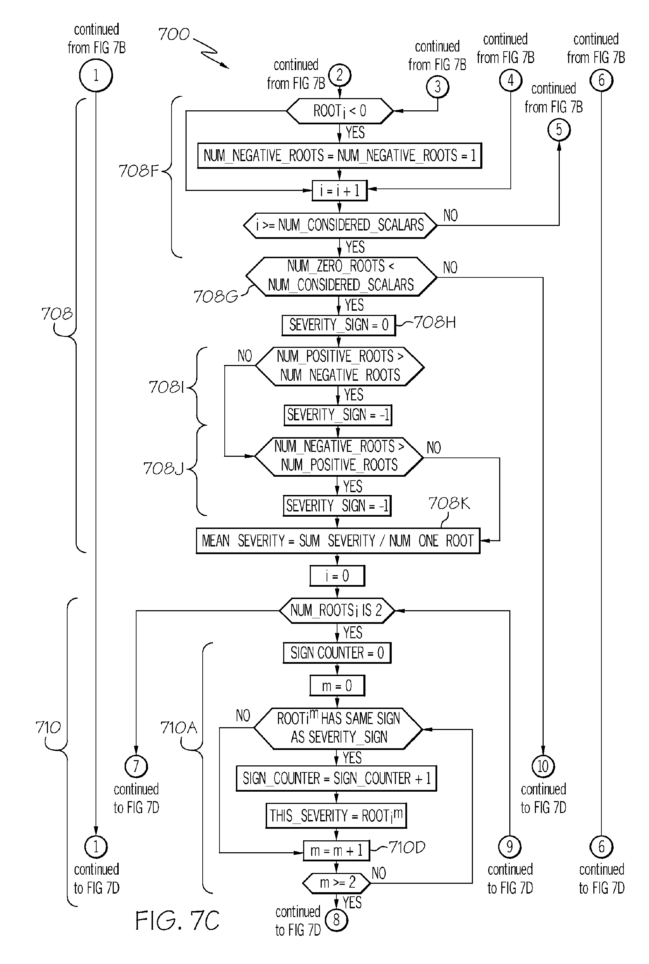

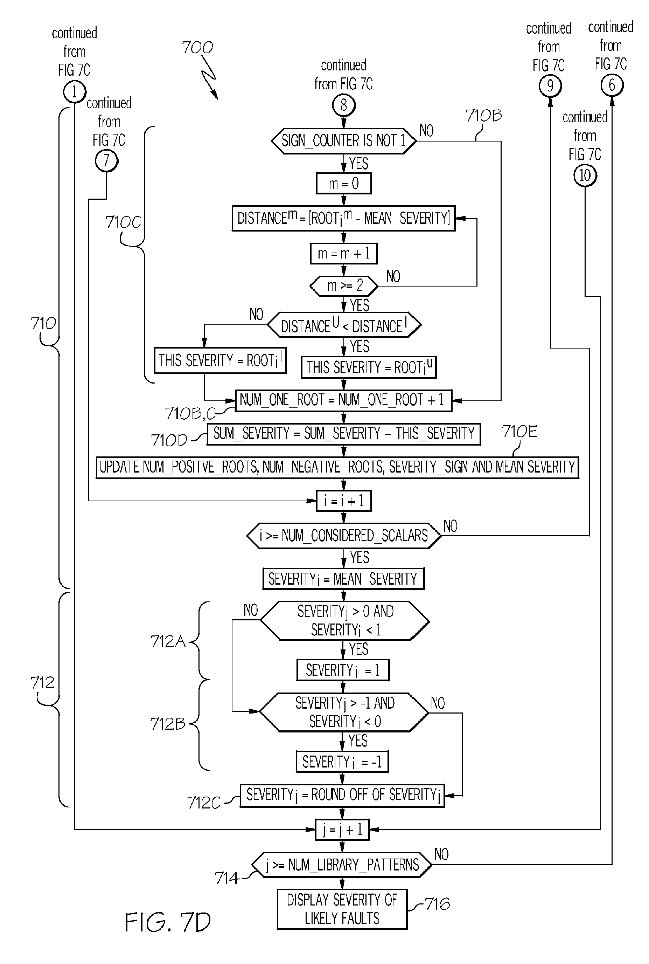

Turning now to FIGs. 7A-7D, an exemplary embodiment of a fault severity classification process 700 is depicted. Specifically, FIG. 7A shows a simplified, high-level flowchart of the steps of the fault severity classification process 700, while FIGs. 7B - 7D provide a more detailed flowchart depicting various exemplary sub-steps of the steps depicted in FIG. 7A. The fault severity classification process 700 is preferably conducted in tandem with, and following, the fault classification process 500 of FIG. 5 and the no fault classification process 600 of FIG. 6 and, as such, may be implemented in connection with the diagnostic process 100 of FIG. 1, the second diagnostic process 400 of FIG. 4, and various other processes. The fault severity classification process 700 estimates the severity of a fault after all of the confidence values have been computed for the various faults. Specifically, the fault severity classification process 700 computes the severity of the likely faults, as previously indicated by the fault classification process 500 based on the diagnostic pattern of the engine being tested. Preferably, the fault severity determination is carried out in the fault severity classification process 700 only for the faults that can be potentially a match as indicated by a relatively high confidence. However, this may vary in different embodiments.

The fault severity classification process 700 begins with step 702, in which the severity is initially set equal to zero, before a loop is conducting through the various historical patterns in the fault library. Next, in step 704, a determination is made, with respect to a particular fault in the fault library, as to a level of confidence that the diagnostic pattern for an engine being tested matches a historical pattern for that particular fault. In a preferred embodiment the predetermined threshold is equal to 0.5; however, this may vary by the user and/or in different embodiments. If a particular fault has a level of confidence that is less than the predetermined threshold, then such fault is considered to be very unlikely, and therefore is labeled as "not to be considered." If the fault is determined "not to be considered", such fault will not considered in the upcoming calculations of 706 - 712 described below, but rather the process proceeds directly to step 714, in which a determination is made as to whether there are any remaining faults in the fault library, and step 704 repeats for any such faults remaining in the fault library. Conversely, if a particular fault has a level of confidence that is greater than or equal to the predetermined threshold, then such fault pattern is considered to be at least somewhat unlikely, and therefore is labeled as "to be considered", and will be considered in the upcoming calculations of 706 - 712 described below.

Next, in step 706, for each diagnostic scalar of the diagnostic pattern, a severity measure is calculated of a historical scalar from the fault library needed to match the diagnostic scalar magnitude, for the particular fault being tested. Specifically, a second order polynomial is first solved for a particular diagnostic scalar (step 706A). Preferably, a check is also conducted to ensure that any solutions obtained in step 706A do not exceed a maximum severity level from the library for each particular fault, and any such solutions exceeding the maximum severity level are ignored (step 708B). Also, preferably after any solutions exceeding the maximum severity level are ignored, a determination is made as to how many real solutions remain (step 708C). There may be zero, one, or two real solutions for a particular pattern.

A determination is then made as to whether there are any remaining historical patterns in the fault library that are to be considered, and steps 704A-704C are repeated, as appropriate, for each of the remaining historical patterns in the fault library to be considered for the particular fault being tested (step 704D). After it has been determined in step 704D that all of the historical patterns in the fault library that were labeled as "to be considered" have indeed been considered, then the process proceeds to step 708, described below.

In step 708, a mean severity value is determined for the fault based on all possible solutions needed to match the diagnostic scalar magnitudes. Initially, different values representing the number of historical patterns having positive roots, the number of historical patterns having negative roots, and a sum of severities are each set equal to zero (step 708A). Once these values are set equal to zero, the number of cases where zero roots have been found is counted (708B), followed by the number of cases where only one root has been found (step 708C). The severity values corresponding to the cases in which only one root has been found are added together (step 708D) and, of these cases in which only one root has been found, the number of positive roots (step 708E) and the number of negative roots (step 708F) are counted.

A determination is then made as to whether there were zero solutions for all considered scalars (step 708G) and, if so, the process proceeds directly to the above-referenced step 714, and the next fault from the fault library is analyzed. Otherwise, the predominating sign of the severities is initialized to zero (step 708H). If the predominating sign of the roots for the cases where only one solution was found is positive, then the severity sign is assigned a value of positive one (step 7081). Otherwise, if the predominating sign of the roots for the cases where only one solution was found is negative, then the severity sign is assigned a value of negative one (step 708J). The mean severity is then computed as the average of the severities taken into account so far (step 708K).

By the completion of step 708, each of the zero and one solution cases have been considered, and only the two solution cases (if any) remain to be considered. Accordingly, next, in step 710, the process determines which of the two solutions to keep, and which to discard. Specifically, it is determined how many of the two roots have the same sign as the severity sign computed in step 708 earlier in the process (step 710A). If it is determined in step 710A that only one root out of the two has the same sign as the severity sign computed in step 708, then this root is determined to be the "correct" solution (step 710B). Otherwise, the algorithm computes the distance of the two roots from the mean severity computed in step 708, specifically, the absolute value of the root minus the mean severity, and chooses the closest root, namely the root with the smaller distance (step 710C). In either case, this yields another possible value for severity, which is added to the previous values (step 710D). The values are then updated for the number of positive and negative roots, the sign of the severity and its mean value by repeating steps 708E, 708F, and steps 708H - 708K (step 710E). The severity for the particular scalar is then set equal to the mean severity (step 710F).

Next, in step 712, severities are then rounded. Specifically, if the severity is between zero and positive one, then the severity is set equal to positive one, in order to prevent low positive severities from showing up as zero (step 712A). Conversely, if the severity is between zero and negative one, then the severity is set equal to negative one, in order to similarly prevent low negative severities from showing up as zero (step 712B). For all other values, the severity values are rounded to the nearest integer value (step 712C).

After the severity values are rounded, a determination is made in step 714 as to whether steps 704 - 712 have been conducted for each of the faults in the fault library. If it is determined in step 714 that one or more faults from the fault library have not yet been addressed, then the process returns to step 704, and steps 704 - 712 are repeated, separately, for each of the yet-to-be addressed faults in the fault library. Once it has been determined in step 714 that each of the faults from the fault library has been addressed, then the process proceeds to step 716, in which a user interface message is generated. The user interface message preferably includes a display of the severity levels for each of the faults with confidence values above the predetermined threshold as determined in step 704 above. However, this may vary in different embodiments.

The processes, programs, and systems depicted in the Figures and described above are exemplary in nature, and may vary. These processes, programs, and systems, and/or the components thereof, may vary, and/or may be used together in connection with one another. Moreover, these processes, programs, and systems may be implemented or used in connection with any one or more of a number of different types of engines, vehicles, and/or various other devices, systems, processes, and/or environments. The depicted processes, programs, and systems depicted and described herein can be of significant potential benefit, for example in increasing efficiency and reducing time and costs associated with engine diagnosis, for example after such engines require testing following manufacture, repair, and/or overhaul.

While the invention has been described with reference to a preferred embodiment, it will be understood by those skilled in the art that various changes may be made and equivalents may be substituted for elements thereof without departing from the scope of the invention. In addition, many modifications may be made to adapt to a particular situation or material to the teachings of the invention without departing from the essential scope thereof. Therefore, it is intended that the invention not be limited to the particular embodiment disclosed as the best mode contemplated for carrying out this invention, but that the invention will include all embodiments falling within the scope of the appended claims.

**Claims**

1.  A method (100) for diagnosing potential faults (120) reflected in operational data (106) for a turbine engine (102), the method (100) comprising the steps of:

    generating a diagnostic pattern (118) for the operational data (106), the diagnostic pattern (118) comprising a plurality of scalars (114), each scalar (114) representing an arithmetic relationship between values of the operational data (106) and values predicted by a baseline thermodynamic model (110); and
    comparing (136, 138) the diagnostic pattern (118) with a plurality of historical patterns (134), each historical pattern (134) linked to one or more specific faults (120), to thereby identify one or more likely potential faults (142) reflected in the operational data (106).

2.  The method (100) of Claim 1, further comprising the steps of:

    generating a matrix (124) of operating parameter perturbations to simulate a plurality of engine (102) faults (120); and
    running the matrix (124) through the baseline thermodynamic model (110), to thereby generate a historical pattern (134) for each fault (120), each historical pattern (134) representing a deviation from the baseline thermodynamic model (110) resulting from the fault (120).

3.  The method (100) of Claim 1, wherein:

    at least one of the scalars (114) represents a relationship between:

        a first operational value from the operational data (106); and an expected value of the first operational value, determined at least in part based on a second operational value from the operational data (106) and a known relationship between the first and second operational values, based at least in part on one or more laws of physics; and

    each historical pattern (134) includes a plurality of historical scalars (130), each historical scalar (130) representing a deviation from the baseline thermodynamic model (110).

4.  The method (100) of Claim 1, further comprising the step of:

    quantifying an expected severity (150) of the one or more potential faults (142), based at least in part on the comparison (138) between the diagnostic pattern (118) and the plurality of historical patterns (134).

5.  The method (100) of Claim 1, further comprising the steps of:

    identifying multiple likely potential faults (142) based at least in part on the comparison (138) of the diagnostic pattern (118) with the plurality of historical patterns (134), each likely potential fault (142) having a different historical pattern (134); and

assigning probability values (146) to each of the identified likely potential faults (142) based at least in part on the comparison (138) between the diagnostic pattern (118) and the plurality of historical patterns (134), each probability value (146) representing a probability that the engine (102) has a particular fault (120, 142).

6. A program product (200, 300, 310, 312) for diagnosing potential faults (120) reflected in operational data (106) for a turbine engine (102), the program product (200, 300, 310, 312) comprising:

(a) a program (200) configured to:

generate a diagnostic pattern (118) for the operational data (106), the diagnostic pattern (118) comprising a plurality of scalars (114), each scalar (114) representing an arithmetic relationship between values of the operational data (106) and values predicted by a baseline thermodynamic model (110); and
compare (136, 138) the diagnostic pattern (118) with a plurality of historical patterns (134), each historical pattern (134) linked to one or more specific faults (120), to thereby identify one or more likely potential faults (142) reflected in the operational data (106); and

(b) a computer-readable signal bearing media (300, 310, 312) bearing the program (200).

7. The program product of Claim 6, wherein the program is further configured to:

generate a matrix (124) of operating parameter perturbations to simulate a plurality of engine (102) faults (120); and
run the matrix (124) through the baseline thermodynamic model (110), to thereby generate a historical pattern (134) for each fault (120), each historical pattern (134) representing a deviation from the baseline thermodynamic model (110) resulting from the fault (120).

8. The program product of Claim 6, wherein:

at least one of the scalars (114) represents a relationship between:

a first operational value from the operational data (106); and
an expected value of the first operational value, determined at least in part based on a second operational value from the operational data (106) and a known relationship between the first and second operational values, based at least in part on one or more laws of physics; and

each historical pattern (134) includes a plurality of historical scalars (130), each historical scalar (130) representing a deviation from the baseline thermodynamic model (110).

9. The program product of Claim 6, wherein the program is further configured to:

quantify an expected severity (150) of the one or more potential faults (142), based at least in part on the comparison (138) between the diagnostic pattern (118) and the plurality of historical patterns (134).

10. The program product of Claim 6, wherein the program is further configured to:

identify multiple likely potential faults (142) based at least in part on the comparison (138) of the diagnostic pattern (118) with the plurality of historical patterns (134), each likely potential fault (142) having a different historical pattern (134); and
assign probability values (146) to each of the identified likely potential faults (142) based at least in part on the comparison (138) between the diagnostic pattern (118) and the plurality of historical patterns (134), each probability value (146) representing a probability that the engine (102) has a particular fault (120, 142).

FIG. 1

EP 1 970 786 A2

FIG. 2

FIG. 3

EP 1 970 786 A2

FIG. 4

502
INPUT DIAGNOSTIC SCALARS AND ROUND TO REQUIRED SIGNIFICANT DIGITS

504
CALCULATE Z-SCORE (DIVIDE BY SIGMA) AND NORMALIZE

506
COMPARE INPUT VS FAULT LIBRARY AND COMPUTE DIFFERENCE

500

508
COMPUTE RMS

512
NORMALIZE RMS AND APPLY SCORE TO DETERMINE CONFIDENCE IN FAULT

DETERMINE DIRECTION OF EACH DIAGNOSTIC SCALAR VS. EACH SCALAR IN THE LIBRARY PATTERNS. SCALARS IN SAME DIRECTION INCREASE SCORE.

510

FIG. 5A

INPUT PATTERN —502A

502 { SUBTRACT THE FLEET AVERAGE —502B

ROUND OFF SCALARS —502C

500

SCALE BY THE FLEET SIGMA —504A

NORMALIZE THE PATTERN —504B

i = 0

504 {

504C {
NO — SCALAR$_i$ IN INPUT PATTERN < $\sigma_i$

YES

SCALAR$_i$ IN NORMALIZED PATTERN = 0

i = i + 1

i ≥ NUM_CONSIDERED_SCALARS — NO

YES

TAKE SIGN OF NORMALIZED PATTERN —504D

506 {

506A { j = 0

TAKE PATTERN j IN FAULT LIBRARY

506B { SCALE BY THE FLEET SIGMA —506B

506C { NORMALIZE THE PATTERN —506C

SCALAR_COUNT = 0

i = 0

506D {
NO — SCALAR$_i$ IN MORMALIZED PATTERN NOT 0 OR SCALAR$_i$ IN NORMALIZED LIBRARY PATTERN NOT 0

① continued to FIG 5C

YES

SCALAR_COUNT = SCALAR_COUNT + 1

② continued to FIG 5C

③ continued to FIG 5C

④ continued to FIG 5C

FIG. 5B

continued
from FIG 5B

continued from FIG 5B

continued from FIG 5B

continued
from FIG 5B

① 2 3 4

**506**

**506D** — i = i + 1

**506E** — i ≥ NUM_CONSIDERED_SCALARS — NO

YES

COMPUTE WEIGHTED DIFFERENCE BETWEEN NORMALIZED INPUT AND NORMALIZED LIBRARY PATTERNS

**508** {
SUM THE SQUARES OF THE DELTA'S AND DIVIDE BY SCALARCOUNT — 508A

TAKE THE SQUARE ROOT THIS IS THE RMS j

TAKE SIGNS OF NORMALIZED LIBRARY PATTERN — 510A

**510B** {
SCALAR_SIGN_COUNT = 0

i = 0

**510** {

**510C** {
NO / SCALAR$_i$ IN LIBRARY PATTERN IS 0 AND SCALAR$_i$ IN INPUT PATTERN< σ$_i$

YES

SET SCALAR SIGN IN LIBRARY PATTERN EQUAL TO SCALAR IN INPUT PATTERN

**510D** {
SCALAR$_i$ IN LIBRARY PATTERN HAS SAME SIGN AS SCALAR$_i$ IN INPUT PATTERN — NO

YES

SCALAR_SIGN_COUNT = SCALAR_SIGN_COUNT + 1

i = i + 1

i ≥ NUM_CONSIDERED_SCALARS — NO

YES

SCORE j = SCALAR_SIGN_COUNT / NUM_CONSIDERED_SCALARS — 510E

**510F** {
j = j + 1

j ≥ NUM_LIBRARY_PATTERNS — NO

YES

**512** {
NORMALIZE RMS ARRAY BY ITS LARGEST VALUE — 512A

CONFIDENCE = SCORE * (1 - NORMALIZED RMS) — 512B

*500*

*FIG. 5C*

600

CONFIDENCES FROM FAULT CLASSIFICATION ALGORITHM

FIND THE MAXIMUM CONFIDENCE — 602

604 — MAXIMUM CONFIDENCE >= HIGH THRESHOLD — NO

YES

606 — NO FAULT FOUND CONFIDENCE = 1 – MEAN OF ALL CONFIDENCES

NO — MAXIMUM CONFIDENCE <= LOW THRESHOLD — 608

YES

NO FAULT FOUND CONFIDENCE = 1 – MAXIMUM CONFIDENCE — 610

SORT THE CONFIDENCES FROM LARGE TO SMALL — 612

COUNTER = 0

SUM_CONFIDENCES = 0

j = 0

NO — $CONFIDENCE_j$ < HIGH THRESHOLD AND $CONFIDENCE_j$ > LOW THRESHOLD AND COUNTER < 10

YES

SUM_CONFIDENCES = SUM_CONFIDENCES + $CONFIDENCE_j$

COUNTER = COUNTER + 1

j = j + 1

j >= NUM_LIBRARY_PATTERNS — NO

YES

614

NO FAULT FOUND CONFIDENCE = 1 – SUM_CONFIDENCES/COUNTER — 616

DISPLAY MESSAGE ON USER INTERFACE — 618

FIG. 6

700

702 — SET SEVERITY OF LIBRARY PATTERNS TO ZERO

704 — DETERMINE WHICH FAULTS HAVE A CONFIDENCE ABOVE A SPECIFIED THRESHOLD

CONFIDENCE IN FAULT ≥ THRESHOLD — YES / NO

706 — FOR EACH DIAGNOSTIC SCALAR CALCULATE THE SEVERITY (OR MAGNITUDE) OF THE LIBRARY FAULT SCALAR NEEDED TO MATCH THE DIAGNOSTIC SCALAR MAGNITUDE

708 — DETERMINE THE MEAN SEVERITY OF THE FAULT BASED ON ALL POSSIBLE SOLUTIONS NEEDED TO MATCH DIAGNOSTICS SCALAR MAGNITUDES

710 — ACCOUNT FOR SIGN CONVENTION TO DETERMINE NEGATIVE OR POSITIVE FAULT

712 — ROUND OFF SEVERITY

SET SMALL SEVERITY LEVEL
1>SEVERITY>0 = 1
0>SEVERITY>-1 = -1

714 — i > NUMBER OF FAULTS — NO / YES

716 — DISPLAY SEVERITY OF FAULTS ABOVE CONFIDENCE THRESHOLD

FIG. 7A

700

702 {
j = 0

SEVERITY$_j$ = 0
}

NO ← CONFIDENCE$_j$ >= SEVERITY THRESHOLD    704

↓ YES

i = 0

706A

706 {

SOLVE THE POLYNOMIALS FOR SCALAR$_i$ OF THE SCALED INPUT PATTERN

706B {
DISCARD SUCH ROOTS ← NO ← ROOTS BETWEEN 0 AND MAX SEVERITY
}

↓ YES    706C

NUM_ROOTS$_i$ = NUMBER OF REAL ROOTS FOR SCALAR$_i$ (0,1 OR 2)

i = i + 1    706D

i >= NUM_CONSIDERED_SCALARS → NO

↓ YES

i = 0

NUM_ZERO_ROOTS = 0

708A {
NUM_ROOT = 0, NUM_POSITIVE_ROOTS = 0, NUM_NEGATIVE_ROOTS = 0
}

SUM_SEVERITY = 0

NO ← NUM_ROOTS$_i$ IS 0

708B {
↓ YES

NUM_ZERO_ROOTS = NUM_ZERO_ROOTS + 1
}

NUM_ROOTS$_i$ IS 1 → NO

↓ YES

NUM_ONE_ROOT = NUM_ONE_ROOT + 1    708C

708D {
SUM_SEVERITY = SUM_SEVERITY + ROOT$_i$
}

ROOT$_i$ > 0 → NO

↓ YES

708E — NUM_POSITIVE_ROOTS = NUM_POSITIVE_ROOTS + 1

708

4
continued to FIG 7C

6
continued to FIG 7C

1
continued to FIG 7C

2
continued to FIG 7C

3
continued to FIG 7C

5
continued to FIG 7C

FIG. 7B

FIG. 7C

FIG. 7D

EP 1 970 786 A2

160

FILE TOOLS

CELL NAME: XXXX
MODEL NUMBER: XXXX
SERIAL NUMBER: XXXX

| TEST DATE | TEST TIME |
|-----------|-----------|
| XXXX | XXXX |
| XXXX | XXXX |

DELETE

FIG. 8

EP 1 970 786 A2

File

TEST INFORMATION

| NAME | VALUE | DESCRIPTION | |
|---|---|---|---|
| CELL NAME | XXXX | | |
| MODEL  # | XXXX | | |
| SERIAL  # | XXXX | | |
| OFFSETDAT | XXXX | | |

SALES LIMIT:

| PARAMETER | TEST | SALES LIMIT AT 4777 SHP | SALE |
|---|---|---|---|
| T45 (F) | 1607 | 1620 | 13.0 |
| SFC (ibm/hr/shp) | 0.500 | 0.513 | 0.013 |
| WF (ibm/hr) | 2390 | 2451 | 61.0 |

FLEET AVERAGE:

| PARAMETER | TEST | FLEET LIMIT AT 4777 SHP | FLEET |
|---|---|---|---|
| T45 (F) | 1607 | 1583 | -24.0 |
| SFC (ibm/hr/shp) | 0.500 | 0.498 | -0.00 |
| WF (ibm/hr) | 2390 | 2378 | -12.0 |

| MGTR vs SHPR | NGR vs MGTR | WFR vs SHPR | NGR vs SHPR |

FIG. 9

162

FIG.10

FIG. 11

File  Options

| MGT BIAS (+) : 1 | COMBUSTOR LINER (+) : 0.647642 |

_168

FAULT MGT BIAS (+)                    CONFIDENCE LEVEL: 1

CHECK / DETECTION                    REPAIR/ MAINTENANCE ACTION IF TRUE

☑ 1.  INSPECT MGT HARNESS FOR DAMAGE OR
     COLD JUNC (L1)
☑ 2. CHECK PWT NOZZLE AREA IN DATA (L1)
☐ 3. CHECK FUEL NOZZLES FOR CLOGGING (L1)
☐ 4. CHECK WA MEASUREMENT (L1)
☐ 5. CHECK PROFILE (L1)
☐ 6. WAS MGT HIGH ENOUGH TO REJECT
     ENGINE (L2)

1. REPAIR/REPLACE AS NEEDED
2. INSERT CORRECT NOZZLE AREA
3. REPLACE BAD FUEL NOZZLES
4. FIX PROBLEM IN BELLMOUTH
5. INSTALL BREAKOUT HARNESS
6. CONTACT ENGINEERING. DETERMINE IF
   COMBUSTOR LINER NEEDS TO BE CHANGED.

REPAIR COMMENTS:

FIG. 12